# EUROPÄISCHE PATENTANMELDUNG

(11) **EP 1 358 979 A2**
(43) Veröffentlichungstag der Anmeldung: **05.11.2003**
(21) Anmeldenummer: 03007842.2
(22) Anmeldetag: 05.04.2003
(51) Int. Cl.: B27G 15/00, B23B 51/02

(54) **Bohrer**

(30) Priorität: 04.05.2002 DE 10220023
(71) Anmelder: TTS Tooltechnic Systems AG & Co. KG, 73240 Wendlingen (DE)
(72) Erfinder: Plavac, Wolfgang, 75389 Neuweiler (DE); Kirchner, Manfred, 73272 Neidlingen (DE)
(74) Vertreter: Reimold, Otto, Dr. Dipl.-Phys.

(57) **Zusammenfassung**

Ein Bohrer (1) weist ein Schaftteil (2) und ein am Kopfende des Schaftteils (2) lösbar befestigtes oder befestigbares Bohr-Kopfteil (3) auf. Am einen Teil (Kopfteil 3) ist ein axialer Steckzapfen (10) angeordnet, der in eine Steckzapfenaufnahme (11) am anderen Teil (Schaftteil 2) gesteckt wird. Eine Sicherungseinrichtung zum Sichern des Kopfteils (3) gegen ein Verdrehen weist mindestens einen mit radialem Abstand parallel zur Bohrer-Achslinie (9) verlaufenden Steckbolzen (12, 13) auf, der am Kopfteil (3) oder am Schaftteil angeordnet ist. Jedem Steckbolzen (12, 13) ist eine Steckbohrung (14, 15) am anderen Teil zugeordnet. Ferner wird das Kopfteil (3) mittels einer Fixiereinrichtung am Schaftteil (2) gehalten, die ein Spannelement (16) enthält, das in radialer Richtung gegen den Steckzapfen (10) spannbar ist.

## Beschreibung

Die Erfindung betrifft einen Bohrer zum Einbringen von Bohrungen in Werkstücke, mit einem Bohrer-Schaftteil und einem am Kopfende des Schaftteils lösbar befestigten oder befestigbaren, mit Schneiden versehenen Bohr-Kopfteil, wobei ein axialer Steckzapfen am einen Teil in eine axiale Steckzapfenaufnahme am anderen Teil gesteckt bzw. steckbar ist und wobei eine Sicherungseinrichtung zum Sichern des Kopfteils gegen ein Verdrehen und eine das Kopfteil am Schaftteil haltende Fixiereinrichtung vorhanden sind.

Bei einem solchen Bohrer, wie er aus dem DE 295 12 886 U1 bekannt ist, kann das Kopfteil beispielsweise im Falle einer Beschädigung des Schaftteils ausgetauscht oder in Kombination mit hinsichtlich der Gestalt oder des Materials verschiedenen Schaftteilen verwendet werden. Ferner kann man das Kopfteil vom Schaftteil wegnehmen, wenn die Schneiden des Kopfteils nachgeschliffen werden sollen. Ein Bohrer mit einem lösbaren Kopfteil weist daher mit Bezug auf Bohrer, bei denen das Schaftteil und das Kopfteil dauerhaft fest miteinander verbunden sind, einige Vorteile auf.

In dem bekannten Falle wird die Verdreh-Sicherungseinrichtung dadurch gebildet, dass der Steckzapfen und die Steckzapfenaufnahme einen von einer Kreisgestalt abweichenden Umfang aufweisen. Eine solche Anordnung ist jedoch regelmäßig mit einem gewissen Spiel behaftet. Ferner wird als Fixiereinrichtung eine Entriegelungskugel, ein Magnetelement, ein durchgesteckter Sicherungsstift oder ein Halteelement beispielsweise in Gestalt einer Klammer oder Feder vorgeschlagen. Auch diese Fixiereinrichtungen weisen üblicherweise ein Spiel auf, so dass den mit der Austauschbarkeit des Kopfteils verbundenen Vorteilen der Nachteil eines toleranzbehafteten Bohrens gegenübersteht.

Der vorliegenden Erfindung liegt daher die Aufgabe zugrunde, einen Bohrer der eingangs genannten Art zu schaffen, mit dem ein möglichst toleranzfreies Bohren möglich ist. Dies soll mit einfachen und somit kostengünstigen Maßnahmen erreicht werden.

Diese Aufgabe wird erfindungsgemäß dadurch gelöst, dass die Verdreh-Sicherungseinrichtung mindestens einen am Kopfteil oder am Schaftteil mit radialem Abstand zu dem an dem betreffenden Teil angeordneten Steckzapfen oder der Steckzapfenaufnahme angeordneten, zur Bohrer-Achslinie parallelen Steckbolzen aufweist, dem eine Steckbohrung am Schaftteil bzw. am Kopfteil zugeordnet ist, und dass die Fixiereinrichtung ein am die Steckzapfenaufnahme bildenden Teil gelagertes Spannelement aufweist, das in radialer Richtung gegen den Steckzapfen spannbar ist.

Der mindestens eine Steckzapfen hält das Kopfteil unverdrehbar am Schaftteil. Dabei können der Steckzapfen und der mindestens eine Steckbolzen kreisrund und genau in die Steckzapfenaufnahme bzw. die Steckbohrung passend gearbeitet werden, so dass in Drehrichtung, auch bei großen Kräften, keine Toleranzen auftreten. Dies gilt auch in radialer Richtung. Des Weiteren erhält man mittels des Spannelements ein festes Verspannen des Kopfteils mit dem Schaftteil. Dabei wird der Gefahr einer nicht genau fluchtenden Anordnung von Schaftteil und Kopfteil nach dem Verspannen, das in radialer Richtung erfolgt, durch den mindestens einen Steckbolzen begegnet, der somit nicht nur zur verdrehfesten Verbindung beiträgt, sondern auch die axiale Ausrichtung des Kopfteils gewährleistet. Zweckmäßigerweise ist der Steckzapfen am Kopfteil und die Steckzapfenaufnahme am Schaftteil angeordnet. Eine weitere zweckmäßige Maßnahme besteht darin, dass der mindestens eine Steckbolzen am Kopfteil und die mindestens eine Steckbohrung am Schaftteil angeordnet ist.

Bei einer bevorzugten Ausführungsform weist die Verdreh-Sicherungseinrichtung zwei beiderseits des Steckzapfens oder der Steckzapfenaufnahme angeordnete Steckbolzen auf, denen zwei beiderseits der Steckzapfenaufnahme bzw. des Steckzapfens angeordnete Steckbohrungen zugeordnet sind. Auf diese Weise erhält man eine mit Bezug auf den Steckzapfen symmetrische Anordnung, so dass das Auftreten von das Bohrergebnis eventuell beeinträchtigenden Momenten oder Unwuchtkräften vermieden wird.

Die beim Verspannen wirksamen Kräfte werden besonders gut aufgenommen, wenn das Spannelement im Wesentlichen in Richtung der die Steckzapfen/Steckzapfenaufnahme-Anordnung und die Steckbolzen/Steckbohrung-Anordnung enthaltenden Längsebene des Bohrers gegen den Steckzapfen spannbar ist.

Das Spannelement kann von einer Spannschraube gebildet werden, die in eine von außen her bis zur Steckzapfenaufnahme durchgehende Gewindebohrung des die Steckzapfenaufnahme bildenden Teils eingeschraubt ist. Dabei kann der Steckzapfen an der mit der Spannschraube zusammenwirkenden Stelle abgeflacht sein.

Bei den aus dem DE 295 12 886 U1 bekannten Bohrern weist das Schaftteil einen durchgehend kreisrunden oder mehreckigen Querschnitt auf. Um die Abfuhr der beim Bohren entstehenden Späne nicht zu behindern, muss der Durchmesser eines solchen Schaftteils wesentlich kleiner als der Durchmesser des Kopfteils sein. Ab einer gewissen Tiefe der Bohrung kann es jedoch zu Verstopfungen des Bohrloches kommen, wenn die beim Bohrvorgang auf die Späne ausgeübten Kräfte nicht mehr ausreichen, die Späne aus dem Bohrloch zu transportieren. In diesem Zusammenhang ist es vorteilhaft, dass das Schaftteil eine doppelwendelförmige Gestalt mit zwei um 180° versetzten Wendelkanälen aufweist, wobei die am Schaftteil angeordnete Steckzapfenaufnahme von einer Aufnahmebohrung mit einem mit Bezug auf die Wanddicke des Schaftteils zwischen den beiden Wendelkanälen größeren Durchmesser gebildet wird, so dass die Aufnahmebohrung seitlich zu beiden Wendelkanälen hin offen ist und zwei durch die Steckzapfenaufnahme voneinander getrennte Schaftpartien gebildet werden, wobei die Spannschraube durch eine der Schaftpartien geschraubt ist. In einem solchen Falle kann der Außendurchmesser des Schaftteils größer sein und dem Durchmesser des Kopfteils entsprechen. Die beiden Wendelkanäle gewährleisten auch bei großer Bohrtiefe eine sichere Spanabfuhr.

Ein Ausführungsbeispiel der Erfindung wird nun anhand der Zeichnung beschrieben. Es zeigen:
- Figur 1: einen erfindungsgemäßen Bohrer in schematischer Schrägansicht in explodierter Darstellungsweise, wobei der die Erfindung betreffende Bohrerbereich zusätzlich vergrößert gezeigt ist, und
- Figur 2: den Bohrer nach Figur 1 im zusammengebauten Zustand im Längsschnitt in die ineinandergesteckten Endbereiche des Schaftteils und des Kopfteils zeigender Teildarstellung.

Der aus der Zeichnung hervorgehende Bohrer 1 dient zum Einbringen von Bohrungen in Werkstücke, die beispielsweise aus Holz, Spanmaterial, Kunststoff usw. bestehen. Hierzu wird der Bohrer in üblicher Weise drehfest mit der Abtriebsspindel einer Bohrmaschine verbunden.

Der Bohrer 1 setzt sich aus einem Schaftteil 2 und einem Bohr-Kopfteil 3 zusammen. Das Schaftteil 2 weist Längsgestalt auf und kann mit seinem einen Ende, dem Befestigungsende 4, mit der Bohrmaschine verbunden werden. Am entgegengesetzten Kopfende 5 des Schaftteils 2 kann das Kopfteil 3 lösbar befestigt werden, so dass es ausgetauscht werden kann. An der dem Schaftteil 2 entgegengesetzten Stirnseite des Kopfteils 3 ist eine beim Ausführungsbeispiel von zwei einander entgegengesetzten Vorschneiden 6 und zwei einander entgegengesetzten Hauptschneiden 7 gebildete Schneidenanordnung vorhanden. Beim Betrieb des Bohrers tragen die Hauptschneiden 7 das Werkstückmaterial am Boden des Bohrloches ab. Das dargestellte Kopfteil 3 weist ferner noch einen stirnseitig vorstehenden, im vorliegenden Zusammenhang nicht weiter interessierenden Zentrierstift 8 auf.

Das Schaftteil 2 und das Kopfteil 3 werden in axialer Richtung (Bohrer-Achslinie 9) zusammengesteckt. Hierzu weist das Kopfteil 3 an seiner der Schneidenanordnung 6, 7 entgegengesetzten Stirnseite einen in axialer Richtung vorstehenden Steckzapfen 10 auf, dem eine entsprechend axial gerichtete, von der zugewandten Stirnseite des Schaftteils 2 ausgehende Steckzapfenaufnahme 11 am Schaftteil 2 zugeordnet ist, in die er eingesteckt werden kann.

Im am Schaftteil 2 befestigten Zustand, wenn der Steckzapfen 10 in die Steckzapfenaufnahme 11 eingesteckt ist, ist das Kopfteil 3 gegen ein Verdrehen relativ zum Schaftteil 2 gesichert. Hierzu sind an der den Steckzapfen 10 aufweisenden Stirnseite des Kopfteils 3 zwei beiderseits des Steckzapfens 10 mit radialem Abstand zu diesem angeordnete, zur Bohrer-Achslinie parallele Steckbolzen 12, 13 vorhanden, denen jeweils eine von der zugewandten Stirnseite des Schaftteils 2 ausgehende Steckbohrung 14, 15 im Schaftteil 2 zugeordnet ist, so dass beim Zusammenstecken des Kopfteils 3 mit dem Schaftteil 2 die beiden Steckbolzen 12, 13 in die beiden Steckbohrungen 14, 15 eingesteckt werden. Die beiden Steckbolzen 12, 13 liegen sich mit Bezug auf die Bohrer-Achslinie 9 diametral gegenüber. Gleiches gilt für die beiden Steckbohrungen 14, 15.

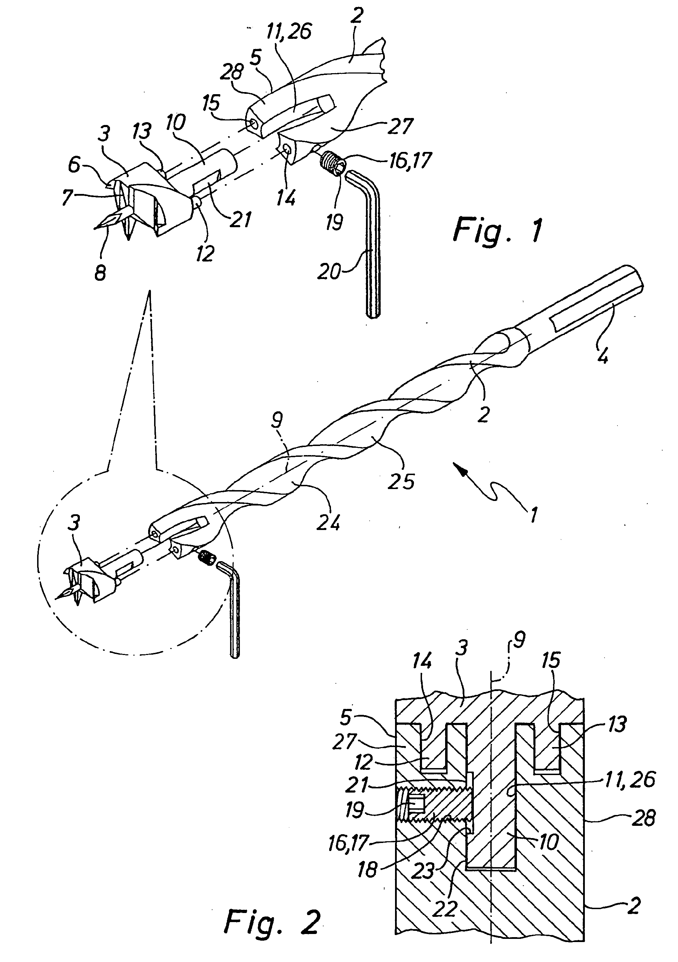

Ferner ist eine das Kopfteil 3 am Schaftteil 2 haltende Fixiereinrichtung vorhanden. Diese Fixiereinrichtung weist ein am die Steckzapfenaufnahme 11 bildenden Schaftteil 2 gelagertes Spannelement 16 auf, das in radialer Richtung gegen den Steckzapfen 10 spannbar ist. Dabei wird das Spannelement 16 im Wesentlichen in Richtung der die Steckzapfen / Steckzapfenaufnahme-Anordnung (10, 11) und die Steckbolzen/Steckbohrung-Anordnung (12, 13, 14, 15) enthaltenden Längsebene des Bohrers 1 gegen den Steckzapfen 10 gespannt. Diese Längsebene entspricht der Schnittebene der Figur 2. Das Spannelement 16 stützt sich einerseits am Schaftteil 2 ab und drückt andererseits gegen den Steckzapfen 10, so dass dieser gegen den entgegengesetzten Wandbereich der Steckzapfenaufnahme 11 gespannt wird. Diese Spannkräfte könnten, würden die in die Steckbohrungen 14, 15 eingreifenden Steckbolzen 12, 13 fehlen, zu Verformungen des Schaftteils führen. Das Auftreten solcher Verformungen wird durch die Steckbolzen 12, 13 vermieden, die das Schaftteilende an einem sonst möglichen Aufweiten beiderseits der Steckzapfenaufnahme 11 hindern. Das Spannelement 16 ist in axialer Richtung, von der Stirnseite des Schaftteils 2 aus gesehen, mit verhältnismäßig geringem Abstand hinter der zugewandten Steckbohrung 14 angeordnet.

Das Spannelement 16 wird beim Ausführungsbeispiel von einer Spannschraube 17 gebildet, die in eine von außen her bis zur Steckzapfenaufnahme 11 durchgehende Gewindebohrung 18 des die Steckzapfenaufnahme 11 bildenden Schaftteils 2 eingeschraubt ist. Die Spannschraube 17 kann eine sogenannte Madenschraube sein, so dass sie im eingeschraubten Zustand außen am Schaftteil 2 nicht vorsteht. Am Betätigungsende der Spannschraube 17 ist eine Betätigungsausnehmung 19 in Gestalt eines Innensechskantes angeordnet, so dass die Spannschraube 17 mittels eines Inbusschlüssels 20 verdreht werden kann.

Der Steckzapfen 10, die Steckzapfenaufnahme 11, die Steckbolzen 12, 13 und die Steckbohrungen 14, 15 weisen eine zylindrische Gestalt auf. Dabei ist vorgesehen, dass der Steckzapfen 10 an der mit der Spannschraube 17 zusammenwirkenden Stelle abgeflacht ist. Durch diesen Flachbereich 21 der Außenumfangsfläche des Steckzapfens 10 erhält man einen verbesserten Angriff der Spannschraube 17 am Steckzapfen 10. Außerdem wird auf diese Weise eine Verliersicherung gebildet, die ein Wegfallen des Kopfteils 3 vom Schaftteil 2 verhindert, falls sich die Spannschraube 17 unabsichtlich gelockert haben sollte. In einem solchen Falle kann sich das Kopfteil 3 zwar in axialer Richtung 9 bewegen, stößt jedoch recht bald an den Absatz 23, der am Steckzapfen 10 zwischen dem Flachbereich 21 und dem sich zum Zapfenende hin an den Flachbereich 21 anschließenden Außenumfangsbereich 22 des Steckzapfens 10 angeordnet ist.

Damit auch bei größeren Bohrtiefen eine sichere Spanabfuhr gewährleistet ist, weist das Schaftteil 2 eine doppelwendelförmige Gestalt mit zwei um 180° versetzten Wendelkanälen 24, 25 auf, durch die die beim Bohren vom Kopfteil 3 erzeugten Späne aus dem Werkstück transportiert werden.

Aus der Zeichnung ist ferner ersichtlich, dass die am Schaftteil 2 angeordnete Steckzapfenaufnahme 11 von einer Aufnahmebohrung 26 gebildet wird, die einen mit Bezug auf die Wanddicke des Schaftteils 2 zwischen den beiden Wendelkanälen 24, 25 größeren Durchmesser aufweist, so dass die Aufnahmebohrung 26 und somit die Steckzapfenaufnahme 11 seitlich zu den beiden Wendelkanälen 24, 25 hin offen ist. Die Steckzapfenaufnahme 11 weist daher eine schlitzähnliche Gestalt mit dem Durchmesser der Aufnahmebohrung entsprechend eingewölbten Schlitzrändern auf. Somit ergeben sich am Kopfende des Schaftteils 2 zwei beiderseits der Steckzapfenaufnahme 11 angeordnete und durch diese voneinander getrennte Schaftpartien 27, 28, die sich parallel zur axialen Richtung 9 erstrecken. Die Spannschraube 17 ist durch eine dieser Schaftpartien (Schaftpartie 27) geschraubt. Die Steckbohrungen 14, 15 sind jeweils in einer der beiden Schaftpartien 27, 28 ausgebildet.

Im Unterschied zum dargestellten und beschriebenen Ausführungsbeispiel könnte der Steckzapfen prinzipiell auch am Schaftteil und die Steckzapfenaufnahme am Kopfteil angeordnet werden. Ferner könnten die Steckbolzen auch am Schaftteil und dementsprechend die Steckbohrungen am Kopfteil sitzen. Des Weiteren sind nicht unbedingt zwei Steckbolzen mit jeweils zugeordneter Steckbohrung erforderlich. Prinzipiell würde ein Steckbolzen und eine Steckbohrung genügen.

## Patentansprüche

1. Bohrer zum Einbringen von Bohrungen in Werkstücke, mit einem Bohr-Schaftteil und einem am Kopfende des Schaftteils lösbar befestigten oder befestigbaren, mit Schneiden versehenen Bohr-Kopfteil, wobei ein axialer Steckzapfen am einen Teil in eine axiale Steckzapfenaufnahme am anderen Teil gesteckt bzw. steckbar ist und wobei eine Sicherungseinrichtung zum Sichern des Kopfteils gegen ein Verdrehen und eine das Kopfteil am Schaftteil haltende Fixiereinrichtung vorhanden sind, **dadurch gekennzeichnet, dass** die Verdreh-Sicherungseinrichtung mindestens einen am Kopfteil (3) oder am Schaftteil mit radialem Abstand zu dem an dem betreffenden Teil (3) angeordneten Steckzapfen (10) oder der Steckzapfenaufnahme angeordneten, zur Bohrer-Achslinie (9) parallelen Steckbolzen (12, 13) aufweist, dem eine Steckbohrung (14, 15) am Schaftteil (2) bzw. am Kopfteil zugeordnet ist, und dass die Fixiereinrichtung ein am die Steckzapfenaufnahme (11) bildenden Teil (2) gelagertes Spannelement (16) aufweist, das in radialer Richtung gegen den Steckzapfen (10) spannbar ist.

2. Bohrer nach Anspruch 1, **dadurch gekennzeichnet, dass** der Steckzapfen (10) am Kopfteil (3) und die Steckzapfenaufnahme (11) am Schaftteil (2) angeordnet ist.

3. Bohrer nach Anspruch 1 oder 2, **dadurch gekennzeichnet, dass** der mindestens eine Steckbolzen (12, 13) am Kopfteil (3) und die mindestens eine Steckbohrung (14, 15) am Schaftteil (2) angeordnet ist.

4. Bohrer nach einem der Ansprüche 1 bis 3, **dadurch gekennzeichnet, dass** die Verdreh-Sicherungseinrichtung zwei beiderseits des Steckzapfens (10) oder der Steckzapfenaufnahme angeordnete Steckbolzen (12, 13) aufweist, denen zwei beiderseits der Steckzapfenaufnahme (11) bzw. des Steckzapfens angeordnete Steckbohrungen (14, 15) zugeordnet sind.

5. Bohrer nach einem der Ansprüche 1 bis 4, **dadurch gekennzeichnet, dass** das Spannelement (16) im Wesentlichen in Richtung der die Steckzapfen/Steckzapfenaufnahme-Anordnung (10, 11) und die Steckbolzen/Steckbohrung-Anordnung (12, 13, 14, 15) enthaltenden Längsebene des Bohrers gegen den Steckzapfen (10) spannbar ist.

6. Bohrer nach einem der Ansprüche 1 bis 5, **dadurch gekennzeichnet, dass** das Spannelement (16) von einer Spannschraube (17) gebildet wird, die in eine von außen her bis zur Steckzapfenaufnahme (11) durchgehende Gewindebohrung (18) des die Steckzapfenaufnahme (11) bildenden Teils (2) eingeschraubt ist.

7. Bohrer nach Anspruch 6, **dadurch gekennzeichnet, dass** der Steckzapfen (10) an der mit der Spannschraube (17) zusammenwirkenden Stelle abgeflacht ist.

8. Bohrer nach Anspruch 6 oder 7, **dadurch gekennzeichnet, dass** das Schaftteil (2) eine doppelwendelförmige Gestalt mit zwei um 180° versetzten Wendelkanälen (24, 25) aufweist, wobei die am Schaftteil (2) angeordnete Steckzapfenaufnahme (11) von einer Aufnahmebohrung (26) mit einem mit Bezug auf die Wanddicke des Schaftteils (2) zwischen den beiden Wendelkanälen (24, 25) größeren Durchmesser gebildet wird, so dass die Aufnahmebohrung (26) seitlich zu beiden Wendelkanälen (24, 25) hin offen ist und zwei durch die Steckzapfenaufnahme (11) voneinander getrennte Schaftpartien (27, 28) gebildet werden, wobei die Spannschraube (17) durch eine der Schaftpartien (Schaftpartie 27) geschraubt ist.

9. Bohrer nach Anspruch 8, **dadurch gekennzeichnet, dass** die mindestens eine Steckbohrung (14, 15) in den Schaftpartien (27, 28) ausgebildet ist.
